# EUROPÄISCHE PATENTSCHRIFT

(11) **EP 2 891 229 B1**
(45) Veröffentlichungstag und Bekanntmachung des Hinweises auf die Patenterteilung: **28.06.2023**
(21) Anmeldenummer: 13753155.4
(22) Anmeldetag: 20.08.2013
(51) Int. Cl.: H02K 7/00, H02K 7/116

(54) **GETRIEBEMOTOR**
GEARED MOTOR
MOTORÉDUCTEUR

(30) Priorität: 31.08.2012 DE 102012215509
(43) Veröffentlichungstag der Anmeldung: 08.07.2015
(73) Patentinhaber: Lenze Drives GmbH, 32699 Extertal (DE)
(72) Erfinder: GUHL, Ralf, 31855 Aerzen (DE); HILKEMEIER, Andreas, 32694 Dörentrup (DE); HÜTTE, Jürgen, 32683 Barntrup (DE); SENKE, Arno, 32699 Extertal (DE)
(74) Vertreter: Patentanwälte Ruff, Wilhelm, Beier, Dauster & Partner mbB
(86) Internationale Anmeldenummer: PCT/EP2013/067299
(87) Internationale Veröffentlichungsnummer: WO 2014/033008

(56) Entgegenhaltungen:
- EP-A1- 0 237 617
- WO-A2-2012/041511
- DE-A1- 1 450 122
- DE-A1-102007 038 522
- DE-B3-102005 057 358
- DE-U1- 20 319 356

## Beschreibung

### Anwendungsgebiet und Stand der Technik

Die Erfindung betrifft einen Getriebemotor, der einen Elektromotor mit einer Abtriebswelle und ein Getriebe aufweist. Dabei sind der Elektromotor und das Getriebe aneinander derart angepasst, dass ein Lagerschild des Elektromotors unmittelbar an einer Eingangswellenseite eines Gehäuses des Getriebes befestigbar ist, wobei zur Befestigung des Lagerschildes an der Eingangswellenseite des Gehäuses ein die Abtriebswelle umgebendes Kopplungsgewinde zur Herstellung einer Gewindeverbindung vorgesehen ist.

Aus dem Bereich der industriellen Getriebemotoren, die Fokus der vorliegenden Erfindung sind, ist ein solches Kopplungsgewinde gattungsgemäßer Getriebemotoren bislang nicht bekannt. Es ist jedoch Gegenstand der nachveröffentlichten DE 10 2011 077 930 A1.

Aus der JP 2001-119894 A sowie der DE 10 2005 057 358 B3 sind entsprechende Getriebemotoren kleiner Baugröße und geringer Leistung bekannt.

Die EP 0 237 617 A1 zeigt eine Vorrichtung zur Drehsicherung eines Ritzels auf einer Welle.

Die DE 10 2007 038 522 A1 zeigt eine Statorbefestigung mittels Spannpratzen.

Es hat sich in der Praxis herausgestellt, dass die Kopplung des Elektromotors und des Getriebes im Falle gattungsgemäßer Getriebemotoren, insbesondere bei großen Getriebemotoren mit einer Motorenleistung größer 50 Watt, insbesondere größer 500 Watt, schwierig ist, da es hier von großer Wichtigkeit ist, dass Kopplungsgewinde mit einem Anzugsmoment zu montieren, um ein ungewünschte Trennung des Motors vom Getriebe zu verhindern. Weiterhin ist es wünschenswert, eine Sicherung zur Verfügung zu stellen, die der Trennung des Getriebes vom Motor entgegenwirkt.

Im Hinblick auf das genannte Anzugsmoment hat sich gezeigt, dass dieses von Hand nur mit erheblicher Hebelwirkung und somit großen Werkzeugen bewirkt werden kann, die zudem speziell für diesen Anwendungszweck zur Verfügung gestellt werden müssen.

### Aufgabe und Lösung

Aufgabe der Erfindung ist es daher, einen gattungsgemäßen Getriebemotor dahingehend weiter zu bilden, dass dieser eine vereinfachte Montierbarkeit mit üblichen Werkzeugen und/oder eine vorteilhafte Weise der Sicherung gegen Trennung im Bereich des Kopplungsgewindes aufweist.

Diese Aufgabe wird erfindungsgemäß dadurch gelöst, dass an einem erfindungsgemäßen Getriebemotor ein Sicherungsabschnitt vorgesehen ist, der in befestigtem Zustand eine Relativdrehung des Gehäuses des Getriebes gegenüber dem Lagerschild in eine Löserichtung des Kopplungsgewindes verhindert, wobei dieser Sicherungsabschnitt am Lagerschild oder am Getriebegehäuse durch eine in Tangentialrichtung des Kopplungsgewindes ausgerichtet in den Lagerschild oder das Getriebegehäuse einschraubbare Befestigungsschraube befestigt ist.

Erfindungsgemäß ist demnach vorgesehen, dass ein spezieller Sicherungsabschnitt, insbesondere ein dickwandiges Blech mit einer Bohrung für die Befestigungsschraube, vorgesehen ist, welcher im Übergangsbereich zwischen dem Lagerschild und dem Getriebegehäuse mit mindestens einer dieser beiden Komponenten verschraubt wird, wobei diese Verschraubung durch die genannte Befestigungsschraube und eine in Tangentialrichtung bezogen auf das Kopplungsgewinde erstreckte Gewindebohrung hierfür erfolgt.

Dieser Sicherungsabschnitt verfolgt zwei Ziele. Zum einen begrenzt er im montierten Zustand die Drehbeweglichkeit des Lagerschildes und des Getriebegehäuses gegeneinander. Zum anderen ist er hilfreich für die Montage des Elektromotors am Getriebe.

Dies wird im weiteren Hinblick auf zwei mögliche Varianten jeweils erläutert.

Bei einer ersten Variante des Sicherungsabschnitts ist dieser als am Lagerschild oder am Getriebegehäuse fest angebrachter Sicherungsabschnitt ausgebildet. Der Sicherungsabschnitt selbst ist somit gegenüber der jeweiligen Komponente, also dem Lagerschild oder dem Getriebegehäuse, unbeweglich oder wird zumindest bestimmungsgemäß im Zuge der Montage gegenüber dieser Komponente nicht bewegt. Die tangential ausgerichtete Schraubbohrung für die Befestigungsschraube ist in diesem Falle an der anderen Komponente vorgesehen. Dies gestattet es, zur Schaffung der Gewindeverbindung des Kopplungsgewindes zunächst das Außengewinde der Gewindeverbindung ohne spezielles Werkzeug auf das Innengewinde an der anderen Komponente aufzuschrauben. Dann wird das gewünschte Anzugsmoment zur Herstellung der gekoppelten Endlage dadurch aufgebracht, dass die genannte Befestigungsschraube durch eine Durchbrechung des Sicherungsabschnitts in die tangentialausgerichtete Gewindebohrung eingedreht wird und hierbei das Lagerschild des Elektromotors und das Getriebegehäuse noch um einige Grad weiter verdreht, bis die gewünschte Endstellung erreicht wird.

Die Befestigungsschraube selbst ist vorzugsweise eine Schraube mit einem üblichen Schraubenkopf, insbesondere mit einem Außen- oder Innensechskant. Diese kann mit einfachem und Standard-Werkzeug angezogen werden. Um Biegebeanspruchungen an der Befestigungsschraube zu vermeiden können insbesondere auch bei der nachfolgend beschriebenen alternativen Gestaltung zwischen Schraubenkopf und Sicherungsabschnitt Zwischenelemente Verwendung finden, insbesondere Kugelscheiben und Kegelpfannen nach DIN 6319. Hierzu alternativ können auch Schrauben mit kugelabschnittsförmiger Auflagefläche genutzt werden. In diesem Falle ist die Gegenfläche am Sicherungsabschnitt hierzu entsprechend mit einer kugelabschnittsförmigen Vertiefung zu versehen.

Eine Alternative zu einer solchen Gestaltung mit fest angebrachtem Sicherungsabschnitt sieht vor, dass der Sicherungsabschnitt als vom Lagerschild und vom Getriebegehäuse getrennter Sicherungsabschnitt ausgebildet ist, der mittels der Befestigungsschraube am Lagerschild oder am Lagergehäuse in einer ersten Position festschraubbar ist, so dass er formschlüssig die Bewegung der anderen Komponente in Löse-richtung des Kopplungsgewindes verhindert.

Bei dieser bevorzugten Variante ist der Sicherungsabschnitt somit nicht fester Teil einer der beiden Komponenten, die durch das Lagerschild und das Getriebegehäuse gebildet werden, sondern ein hiervon separater Abschnitt. Dieser wird erst mittels der Befestigungsschraube mit einer der beiden Komponenten verbunden. Während des Anziehens der Befestigungsschraube drückt dieser Sicherungsabschnitt jene Komponente, an der er nicht festgeschraubt wird, in Richtung ihrer Sollposition und bewirkt hiermit das gewünschte Anzugsmoment für eine sichere Kopplung des Getriebes und des Elektromotors. Sobald diese Sollposition erreicht ist, verbleibt der Sicherungsabschnitt in der erreichten Position, um ein Zurückdrehen der Komponenten gegeneinander in Löserichtung des Kopplungsgewindes zu verhindern.

Die Verwendung eines separaten Sicherungsabschnitts ist nicht nur während der Montage des Getriebemotors von Vorteil, sondern auch während der Demontage, wenn der Getriebemotor gemäß einer vorteilhaften Weiterbildung derart ausgebildet ist, dass die Gewindeverbindung zwischen dem Elektromotor und dem Getriebe ausgehend vom verbundenen Zustand unter Nutzung des Sicherungsabschnitts lösbar ist, wobei hierfür der Sicherungsabschnitt in einer zweiten Position am Lagerschild oder dem Getriebegehäuse festschraubbar ist, sodass er hierdurch ein Lösemoment zwischen dem Getriebegehäuse und dem Lagerschild in Löserichtung des Kopplungsgewindes bewirkt.

Bei dieser Weiterbildung ist somit vorgesehen, dass eine zweite Position, in der der Sicherungsabschnitt am Lagerschild oder am Getriebegehäuse angebracht werden kann, vorgesehen ist, wobei durch Anbringen des Sicherungsabschnitts an dieser zweiten Position ein Drehmoment bewirkt wird, welches geeignet ist, das Getriebe und den Motor soweit gegeneinander zu verdrehen, vorzugsweise um einige wenige Grad, dass anschließend ein erleichtertes manuelles Lösen der Komponenten voneinander möglich ist. Die zweite Position, in der der Sicherungsabschnitt anbringbar ist, ist somit keine Position zum dauerhaften Verbleib des Sicherungsabschnitts bei montiertem Getriebemotor, sondern nur eine Möglichkeit zum Lösen des Kopplungsgewindes zur Demontage des Getriebemotors.

Eine besonders vorteilhafte Ausgestaltung sieht vor, dass der Sicherungsabschnitt in der ersten Position und in der zweiten Position am Lagerschild oder dem Getriebegehäuse festschraubbar ist, das weiterhin an der anderen Komponente, an der der Sicherungsabschnitt bestimmungsgemäß nicht anzuschrauben ist, zwei Gegenflächen zur Anlage des Sicherungsabschnitts in dessen erster bzw. in dessen zweiter Position vorgesehen sind und dass die Gegenflächen an der anderen Komponente voneinander um ein größeres Maß beabstandet sind, als die erste und die zweite Position des Sicherungsabschnitts.

Vorteilhafterweise ist dies baulich derart gelöst, dass an beiden Komponenten, dem Lagerschild und dem Getriebegehäuse jeweils aufeinander zu weisend mindestens eine Nocke vorgesehen ist, wobei diese Nocke in Umfangsrichtung an jenem Teil von geringerer Größe ist, an dem die Gewindebohrungen bzw. die Gewindebohrung zum Festschrauben des Sicherungsabschnitts vorgesehen ist.

Durch diese Maßnahme wird erreicht, dass beim Festschrauben des Sicherungsabschnitts in seiner ersten Position an einer der beiden Komponenten, beispielsweise dem Getriebegehäuse, die zweite Komponente, beispielsweise also das Lagerschild, soweit gegenüber der ersten Komponente verdreht wird, dass die daran vorgesehene Nocke in Anzugsrichtung des Gewindes die Nocke der Komponente, an der der Sicherungsabschnitt festgeschraubt wird, tangential überragt. Hierdurch wird die erforderliche Ausgangsposition geschaffen, die es später durch Festschrauben des Sicherungsabschnitts an seiner zweiten Position gestattet, das zum Lösen der beiden Komponenten erforderliche Moment mittels des Sicherungsabschnitts aufzubringen.

Vorteilhaft ist es, wenn an einer oder beiden Komponenten jeweils mehrere derartige Nocken vorgesehen sind, so dass die Anbringung des Sicherungsabschnitts an verschiedenen Stellen erfolgen kann. Hierdurch kann fallweise das am besten von außen zugängliche Nockenpaar zur Kopplung des Elektromotors und des Getriebes genutzt werden.

Weiterhin wird es als vorteilhaft angesehen, wenn der Sicherungsabschnitt noch eine Zusatzfunktion übernimmt. So kann er insbesondere eine Tragöse beinhalten, die zur Handhabung des Getriebemotors gut geeignet ist.

Die Erfindung betrifft darüber hinaus auch ein Verfahren zum Befestigen eines Motors und eines Getriebes aneinander zur Bildung eines Getriebemotors, wobei der Motor und das Getriebe über ein eine Antriebswelle des Motors umgebendes Kopplungsgewindes aneinander anschraubbar sind. Dieses erfindungsgemäße Verfahren sieht vor, dass das Festschrauben des Gewindes am Motor zumindest in einer letzten Phase des Festschraubens dadurch erfolgt, dass ein Sicherungsabschnitt mittels einer in Tangentialrichtung des Kopplungsgewindes einschraubbaren Befestigungsschraube an das Getriebe oder den Motor angeschraubt wird und hierdurch ein Drehmoment in Anziehrichtung des Kopplungsgewindes auf die andere Komponente bewirkt.

### Kurzbeschreibung der Zeichnungen

Weitere Aspekte und Vorteile der Erfindung ergeben sich außer aus den Ansprüchen aus der nachfolgenden Beschreibung eines bevorzugten Ausführungsbeispiels der Erfindung, welches anhand der Figuren erläutert wird. Dabei zeigen:
- Figur 1: das Getriebe und den Elektromotor eines Getriebemotors im noch nicht montierten Zustand,
- Figur 2: den aus den Komponenten der Figur 1 bestehenden Getriebemotor in montiertem Zustand,
- Figur 3a und 3b: den Getriebemotor mit bereits aneinander angekoppeltem Motor und Getriebe, allerdings vor Erreichen der gewünschten Endrelativstellung,
- Figur 4: der Getriebemotor im vollständig montierten und mit Sicherungsabschnitt gesichertem Zustand,
- Figur 5 und 6: die Verwendung des Sicherungsabschnitts zur Erzeugung eines Lösemoments im Zuge der Demontage und
- Fig. 7: eine alternative Gestaltung des Sicherungsabschnitts.

### Detaillierte Beschreibung des Ausführungsbeispiels

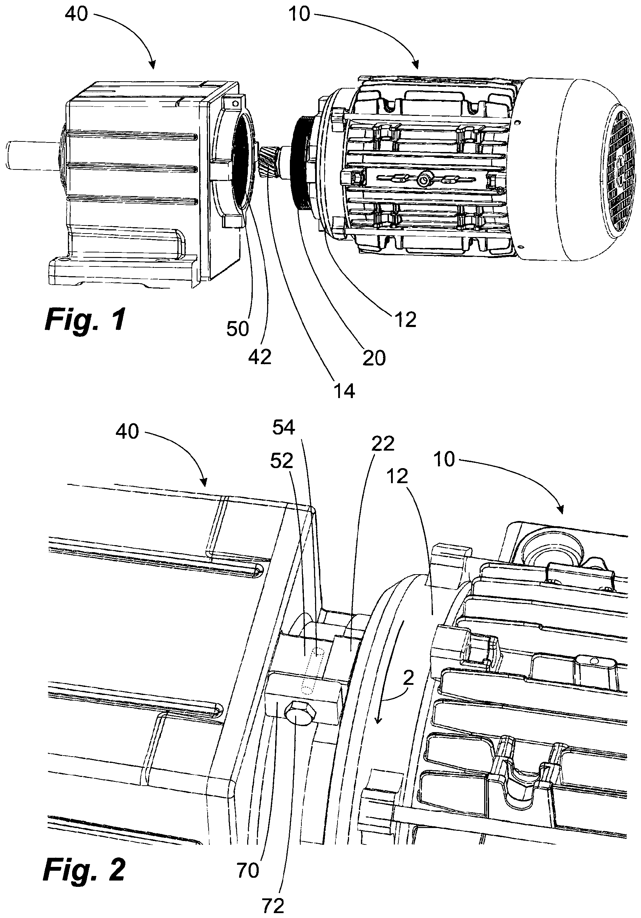

Figur 1 zeigt einen erfindungsgemäßen Getriebemotor in noch nicht montiertem Zustand. Die beiden Hauptkomponenten des Getriebemotors, der Elektromotor 10 sowie das Getriebe 40 sind in diesem Zustand noch nicht gekoppelt. Zur Kopplung der beiden Komponenten 10, 40 ist am Lagerschild 12 des Elektromotors 10 ein Kopplungsaußengewinde 20 vorgesehen, welches eine Abtriebswelle 14 des Elektromotors umgibt. Korrespondierend hierzu ist an der Eingangsseite des vorliegend als Stirnradgetriebe ausgebildeten Getriebes 40 eine Anbauöffnung 42 mit einem Kopplungsinnengewinde 50 versehen.

Zur Kopplung des Motors 10 mit dem Getriebe 40 wird der Motor mittels des Kopplungsaußengewindes 20 in das Kopplungsinnengewinde 50 des Getriebes 40 eingeschraubt. Den gekoppelten Zustand verdeutlicht die Figur 2. Dieser Figur ist weiterhin zu entnehmen, dass außenseitig des Kopplungsgewindes 20, 50 sowohl am Lagerschild 12 als auch am Getriebe 40 jeweils Sicherungsnocken 22, 52 vorgesehen sind. Diese Sicherungsnocken 22, 52 sind in montiertem Zustand des Getriebemotors unmittelbar einander benachbart. Sie weisen unterschiedliche Breiten auf. Die Sicherungsnocke 22 auf Seiten des Elektromotors 10 ist in Umfangsrichtung etwas breiter. Die Sicherungsnocke 52 auf der Seite des Getriebes 40 ist von einer tangential ausgerichteten und in Fig. 2 gestrichelt dargestellten Gewindebohrung 54 durchdrungen. Statt einer Gewindebohrung 54 können selbstverständlich auch eine gewindelose Durchgangsbohrung und eine zusätzliche Mutter Verwendung finden.

Im fertig montierten und gesicherten Zustand, den die Figur 2 zeigt, ist eine Sicherung gegen eine Drehbewegung des Motors in Richtung des Pfeiles 2 und somit in Löserichtung gegeben. Diese Sicherung wird durch einen Sicherungsabschnitt 70 bewirkt, welcher mittels einer in die Gewindebohrung 54 eingeschraubten Befestigungsschraube 72 gesichert ist. Dieser Sicherungsabschnitt 70 erstreckt sich bis in den Bereich des Lagerschildes 12, wodurch der Sicherungsabschnitt 70 im Zusammenwirken mit der Sicherungsnocke 22 formschlüssig verhindert, dass es zur genannten Drehbewegung des Elektromotors in Löserichtung 2 kommt.

Der besondere Vorteil einer Ausgestaltung, bei der der Sicherungsabschnitt 70 durch eine in Tangentialrichtung eingeschraubte Schraube 72 gehalten wird, liegt neben der beschriebenen Sicherung in der Möglichkeit, ein hohes Anzugsmoment während der Montage mittels dieses Sicherungsabschnitts 70 zu bewirken.

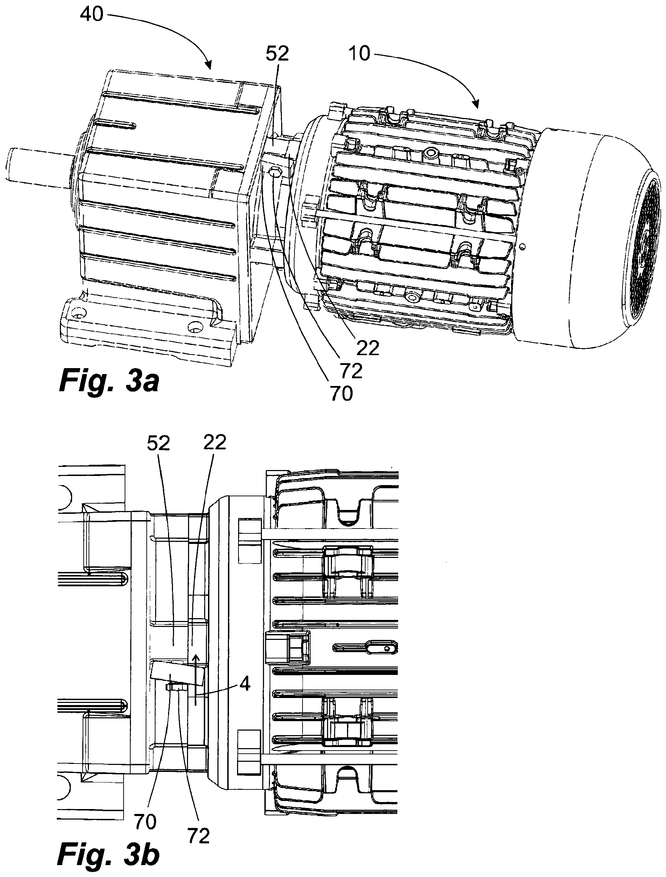

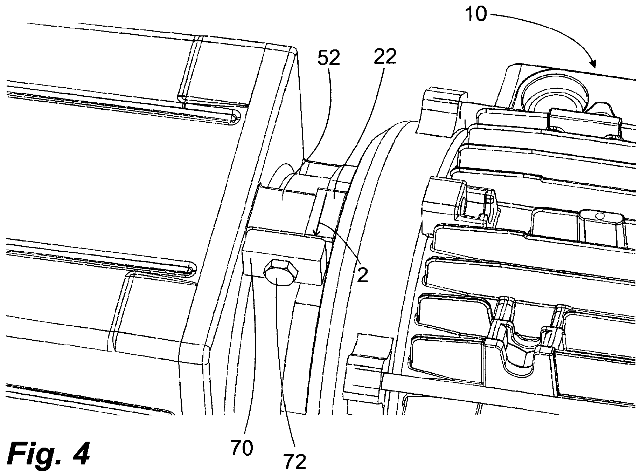

Dies verdeutlichen die Figuren 3a und 3b. Figur 3a zeigt den Getriebemotor in einer Perspektive von schräg oben. Figur 3b zeigt den Übergangsbereich zwischen dem Elektromotor 10 und dem Getriebe 40 von oben. Die dargestellte Relativposition, in der der Motor 10 mit dem Außengewinde 20 noch nicht vollständig in das Innengewinde 50 eingeschraubt ist, ist dadurch zu erzielen, dass der Motor manuell und durch unmittelbare Handhabung in das Getriebe 40 eingeschraubt wird. Ein Anziehen dieses Gewindes bis in die gewünschte Endstellung ist jedoch durch unmittelbare manuelle Handhabung des Elektromotors kaum zu erzielen. Ausgehend von der Relativstellung der Figur 3a wird daher der letzte Teilabschnitt der Drehbewegung dadurch erzielt, dass der Sicherungsabschnitt 70 mittels der Befestigungsschraube 72 an der bezogen auf Figur 3a unteren Seite der Sicherungsnocke 52 fest geschraubt wird. Da er sich in Richtung des Elektromotors 10 und bis in den Bereich der Sicherungsnocke 22 des Elektromotors 10 erstreckt, drückt der Sicherungsabschnitt 70 beim Anziehen der Schraube 72 in Richtung des Pfeiles 4 auf die Sicherungsnocke 22 des Elektromotors, bis der Endzustand der Figur 4 erreicht ist.

Der Sicherungsabschnitt bleibt vorzugsweise auch im Betrieb des Getriebemotors in dieser ersten Position der Fig. 4, in der er ein Zurückdrehen des Elektromotors in Richtung des Pfeiles 2 verhindert.

Sobald eine Demontage des Getriebemotors stattfinden soll, wird der Sicherungsabschnitt 70 durch Losschrauben der Befestigungsschraube 72 gelöst. Nun ist grundsätzlich wieder eine Relativbewegung zwischen dem Elektromotor 10 und dem Getriebe 40 möglich. Aufgrund des hohen Anzugsmoments, welches während der Montage durch den Sicherungsabschnitt 70 bewirkt wurde, ist ein Trennen des Motors und des Getriebes zur Demontage jedoch rein manuell und ohne Werkzeugeinsatz kaum möglich.

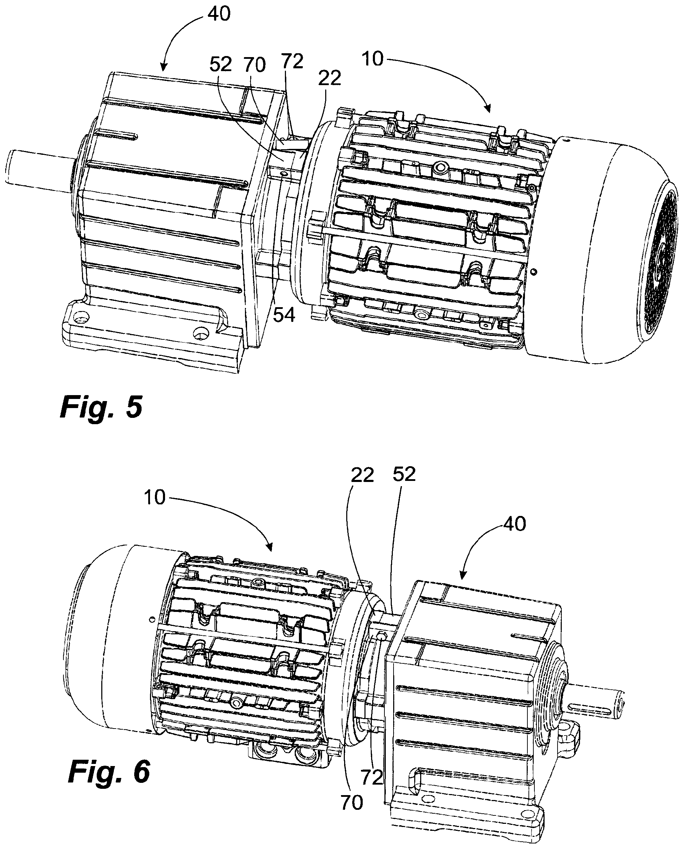

Es ist daher vorgesehen, dass der Sicherungsabschnitt 70 hier wiederum Verwendung findet. Wie Figur 5 verdeutlicht, wird der Sicherungsabschnitt auf der gegenüberliegenden Seite der Sicherungsnocke 52 in die Gewindebohrung 54 eingeschraubt, wobei durch Festziehen die Befestigungsschraube 72 in ähnlicher Weise wie zuvor bei der Montage eine Relativbewegung erzwungen wird, diesmal in Löserichtung. Figur 6 zeigt den Sicherungsabschnitt 70 nach Erreichen von dessen zweiter Position. Ausgehend von dieser Stellung ist es vergleichsweise einfach, den Elektromotor 10 aus dem getriebeseitigen Kopplungsinnengewinde 50 herauszuschrauben.

Die gegenüber der Sicherungsnocke 52 größere Breite der Sicherungsnocke 22 gestattet es somit, durch die Anbringung des Sicherungsabschnitts 70 je nach Position, an der er angebracht wird, sowohl ein Anzugsmoment als auch ein Lösemoment zu verursachen.

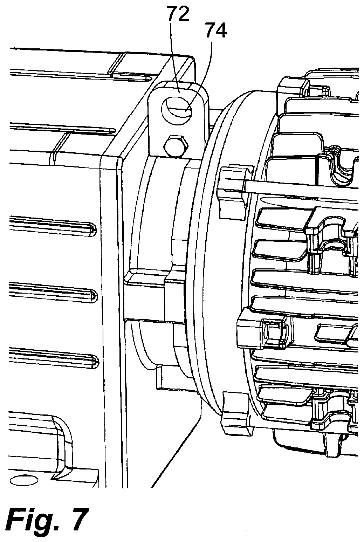

Fig. 7 zeigt eine Abwandlung, bei der der Sicherungsabschnitt 70 gleichzeitig eine Tragöse 74 zur Handhabung des Getriebemotors aufweist. Die Nutzung dieser Sicherungsabschnitts 70 ist ansonsten mit der vorbeschriebenen identisch.

## Patentansprüche

1. Getriebemotor mit
- einem Elektromotor (10) mit einer Abtriebswelle (14) und
- einem Getriebe (40),
wobei
- der Elektromotor (10) und das Getriebe (40) aneinander derart angepasst sind, dass ein Lagerschild (12) des Elektromotors (10) unmittelbar an einer Eingangswellenseite (42) eines Gehäuses des Getriebes (40) befestigbar ist, und
- zur Befestigung des Lagerschildes (12) an der Eingangswellenseite (42) ein die Abtriebswelle (14) umgebendes Kopplungsgewinde (20, 50) zur Herstellung einer Gewindeverbindung vorgesehen ist,
**dadurch gekennzeichnet, dass**
ein Sicherungsabschnitt (70) vorgesehen ist, der im befestigten Zustand eine Relativdrehung des Gehäuses des Getriebes (40) gegenüber dem Lagerschild (12) in einer Löse-Richtung verhindert, wobei dieser Sicherungsabschnitt (70) am Lagerschild (12) oder am Getriebegehäuse (40) durch eine in Tangentialrichtung des Kopplungsgewindes (20, 50) ausgerichtet in den Lagerschild (12) oder das Getriebegehäuse (40) eingeschraubte Befestigungsschraube (72) befestigt ist.

2. Getriebemotor nach Anspruch 1,
**dadurch gekennzeichnet, dass**
der Sicherungsabschnitt als am Lagerschild fest angebrachter Sicherungsabschnitt ausgebildet ist, der mittels der Befestigungsschraube am Getriebegehäuse festschraubbar ist, oder der Sicherungsabschnitt als am Getriebegehäuse fest angebrachter Sicherungsabschnitt ausgebildet ist, der mittels der Befestigungs-schraube am Lagerschild festschraubbar ist.

3. Getriebemotor nach Anspruch 1,
**dadurch gekennzeichnet, dass**
der Sicherungsabschnitt (70) als vom Lagerschild (12) und vom Getriebegehäuse (40) getrennter Sicherungsabschnitt (70) ausgebildet ist, der mittels der Befestigungsschraube (72) am Lagerschild (12) in einer ersten Position festschraubbar ist, so dass er formschlüssig die Bewegung des Getriebegehäuse (40) in Löse-Richtung des Kopplungsgewindes (20, 50) verhindert, oder der mittels der Befestigungsschraube (72) am Getriebegehäuse (40) in der ersten Position festschraubbar ist, so dass er formschlüssig die Bewegung des Lagerschilds (12) in Löse-Richtung des Kopplungsgewindes (20, 50) verhindert.

4. Getriebemotor nach Anspruch 3,
**dadurch gekennzeichnet, dass**
die Gewindeverbindung zwischen dem Elektromotor (10) und dem Getriebe (40) ausgehend vom verbundenen Zustand unter Nutzung des Sicherungsabschnitts (70) lösbar ist, wobei der Sicherungsabschnitt (70) hierfür in einer zweiten Position am Lagerschild (12) oder dem Getriebegehäuse (40) festschraubbar ist, so dass er hierdurch ein Lösemoment zwischen dem Getriebegehäuse und dem Lagerschild (12) in Löse-Richtung des Kopplungsgewindes (20, 50) bewirkt.

5. Getriebemotor nach Anspruch 4
**dadurch gekennzeichnet, dass**
- der Sicherungsabschnitt (70) in der ersten Position und in der zweiten Position am Lagerschild (12) festschraubbar ist, wobei am Getriebegehäuse (40) zwei Gegenflächen zur Anlage des Sicherungsabschnitts (70) vorgesehen sind, oder
- der Sicherungsabschnitt (70) in der ersten Position und in der zweiten Position am Getriebegehäuse (40) festschraubbar ist, wobei am Lagerschild (12) zwei Gegenflächen zur Anlage des Sicherungsabschnitts (70) vorgesehen sind, und
- die Gegenflächen voneinander um ein größeres Maß beabstandet sind als der Sicherungsabschnitt (70) in seiner ersten Position gegenüber seiner zweiten Position.

6. Getriebemotor nach einem der Ansprüche 1 bis 5,
**dadurch gekennzeichnet, dass**
der Sicherungsabschnitt (70) eine Tragöse (74) zur Handhabung des Getriebemotors aufweist.

7. Verfahren zum Befestigen eines Motors (10) und eines Getriebes (40) aneinander, wobei der Motor (10) und das Getriebe (40) über ein eine Abtriebswelle (14) des Motors umgebendes Kopplungsgewinde (20, 50) aneinander anschraubbar sind,
**dadurch gekennzeichnet, dass**
das Festschrauben des Getriebes (40) am Motor (10) zumindest in einer letzten Phase des Festschraubens dadurch erfolgt, dass ein Sicherungsabschnitt (70) mittels einer in Tangentialrichtung des Kopplungsgewindes (20, 50) einschraubbaren Befestigungsschraube (72) an das Getriebe (40) angeschraubt wird und hierdurch ein Drehmoment in Anzieh-Richtung des Kopplungsgewindes (20, 50) auf den Motor (10) bewirkt wird, oder dass der Sicherungsabschnitt (70) mittels der in Tangentialrichtung des Kopplungsgewindes (20, 50) einschraubbaren Befestigungsschraube (72) an den Motor (10) angeschraubt wird und hierdurch ein Drehmoment in Anzieh-Richtung des Kopplungsgewindes (20, 50) auf das Getriebe (40) bewirkt wird.

## Claims

1. A geared motor having
- an electric motor (10) with an output shaft (14) and
- a gear mechanism (40),
- the electric motor (10) and the gear mechanism (40) being adapted to one another in such a way that a bearing plate (12) of the electric motor (10) can be fastened directly to an input shaft side (42) of a housing of the gear mechanism (40), and
- a coupling thread (20, 50) which surrounds the output shaft (14) for producing a threaded connection being provided for fastening the bearing plate (12) to the input shaft side (42),
**characterized in that**
a securing section (70) is provided which, in the fastened state, prevents a relative rotation of the housing of the gear mechanism (40) with respect to the bearing plate (12) in a release direction, said securing section (70) being fastened to the bearing plate (12) or to the gear mechanism housing (40) by way of a fastening screw (72) which is screwed into the bearing plate (12) or the gear mechanism housing (40) in a manner which is oriented in the tangential direction of the coupling thread (20, 50).

2. The geared motor as claimed in claim 1, **characterized in that** the securing section is configured as a securing section which is attached fixedly to the bearing plate or to the gear mechanism housing and can be screwed fixedly to the other component by means of the fastening screw.

3. The geared motor as claimed in claim 1, **characterized in that** the securing section (70) is configured as a securing section (70) which is separated from the bearing plate (12) and from the gear mechanism housing (40) and can be screwed fixedly in a first position to the bearing plate (12) or to the gear mechanism housing (40) by means of the fastening screw (72), with the result that it prevents the movement of the other component in the release direction of the coupling thread (20, 50) in a positively locking manner.

4. The geared motor as claimed in claim 3, **characterized in that** the threaded connection between the electric motor (10) and the gear mechanism (40) can be released starting from the connected state with utilization of the securing section (70), it being possible for the securing section (70) to be screwed fixedly in a second position to the bearing plate (12) or the gear mechanism housing (40) for this purpose, such that it brings about a release torque between the gear mechanism housing and the bearing plate (12) in the release direction of the coupling thread (20, 50) as a result.

5. The geared motor as claimed in claim 4, **characterized in that**
- the securing section (70) can be screwed fixedly in the first position and in the second position to the bearing plate (12) or the gear mechanism housing (40),
- two counterfaces (22) for bearing against the securing section (70) are provided on the other component, and
- the counterfaces (22) are spaced apart from one another by a greater extent than the securing section (70) in its first position in comparison with its second position.

6. The geared motor as claimed in one of claims 1 to 5, **characterized in that** the securing section (70) has a suspension lug (74) for handling the geared motor.

7. A method for fastening a motor (10) and a gear mechanism (40) to one another, it being possible for the motor (10) and the gear mechanism (40) to be screwed to one another via a coupling thread (20, 50) which surrounds an output shaft (14) of the motor, **characterized in that** the gear mechanism (40) is screwed fixedly to the motor (10) at least in a last phase of the fixed screwing operation by virtue of the fact that a securing section (70) is screwed to the gear mechanism (40) or the motor (10) by means of a fastening screw (72) which can be screwed in in the tangential direction of the coupling thread (20, 50) and, as a result, brings about a torque in the tightening direction of the coupling thread (20, 50) onto the other component (10, 40).

## Revendications

1. Motoréducteur comprenant
- un moteur électrique (10) comprenant un arbre de sortie (14) et
- une transmission (40),
dans lequel
- le moteur électrique (10) et la transmission (40) sont adaptés l'un à l'autre de telle sorte qu'un flasque (12) du moteur électrique (10) puisse être fixé directement à un côté d'arbre d'entrée (42) d'un carter de la transmission (40) et
- pour la fixation du flasque (12) au côté d'arbre d'entrée (42), un filetage d'accouplement (20, 50) entourant l'arbre de sortie (14) est prévu pour la réalisation d'une liaison par filetage,
**caractérisé en ce**
**qu'**une partie de sécurité (70) est prévue, laquelle, dans l'état fixé, empêche une rotation relative du carter de la transmission (40) par rapport au flasque (12) dans un sens de desserrage, cette partie de sécurité (70) étant fixée au flasque (12) ou au carter de transmission (40) par le biais d'une vis de fixation (72) vissée dans le flasque (12) ou le carter de transmission (40) de manière orientée dans la direction tangentielle du filetage d'accouplement (20, 50).

2. Motoréducteur selon la revendication 1,
**caractérisé en ce que**
la partie de sécurité est réalisée sous forme de partie de sécurité installée fixement sur le flasque, laquelle peut être vissée à fond sur le carter de transmission au moyen de la vis de fixation, ou la partie de sécurité est réalisée sous forme de partie de sécurité installée fixement sur le carter de transmission, laquelle peut être vissée à fond sur le flasque au moyen de la vis de fixation.

3. Motoréducteur selon la revendication 1,
**caractérisé en ce que**
la partie de sécurité (70) est réalisée sous forme de partie de sécurité (70) séparée du flasque (12) et du carter de transmission (40), laquelle partie de sécurité peut être vissée à fond dans une première position sur le flasque (12) au moyen de la vis de fixation (72), de telle sorte qu'elle empêche par complémentarité de formes le mouvement du carter de transmission (40) dans le sens de desserrage du filetage d'accouplement (20, 50), ou laquelle partie de sécurité peut être vissée à fond dans la première position sur le carter de transmission (40) au moyen de la vis de fixation (72), de telle sorte qu'elle empêche par complémentarité de formes le mouvement du flasque (12) dans le sens de desserrage du filetage d'accouplement (20, 50).

4. Motoréducteur selon la revendication 3,
**caractérisé en ce que**
la liaison par filetage entre le moteur électrique (10) et la transmission (40) peut être desserrée à partir de l'état relié en utilisant la partie de sécurité (70), la partie de sécurité (70) pouvant à cet effet être vissée à fond dans une deuxième position sur le flasque (12) ou le carter de transmission (40), de telle sorte qu'elle produise ainsi un couple de desserrage entre le carter de transmission et le flasque (12) dans le sens de desserrage du filetage d'accouplement (20, 50).

5. Motoréducteur selon la revendication 4,
**caractérisé en ce que**
- la partie de sécurité (70) peut être vissée à fond sur le flasque (12) dans la première position et dans la deuxième position, deux surfaces conjuguées servant à l'appui de la partie de sécurité (70) étant prévues sur le carter de transmission (40), ou
- la partie de sécurité (70) peut être vissée à fond sur le carter de transmission (40) dans la première position et dans la deuxième position, deux surfaces conjuguées servant à l'appui de la partie de sécurité (70) étant prévues sur le flasque (12), et
- les surfaces conjuguées sont espacées l'une de l'autre dans une plus grande mesure que la partie de sécurité (70) dans sa première position par rapport à sa deuxième position.

6. Motoréducteur selon l'une des revendications 1 à 5,
**caractérisé en ce que**
la partie de sécurité (70) présente une oreille (74) servant à la manipulation du motoréducteur.

7. Procédé de fixation d'un moteur (10) et d'une transmission (40) l'un à l'autre, le moteur (10) et la transmission (40) pouvant être vissés l'un à l'autre par le biais d'un filetage d'accouplement (20, 50) entourant un arbre de sortie (14) du moteur,
**caractérisé en ce que**
le serrage à fond de la transmission (40) sur le moteur (10) s'effectue au moins dans une dernière phase du serrage à fond, de telle sorte qu'une partie de sécurité (70) soit vissée sur la transmission (40) au moyen d'une vis de fixation (72) pouvant être vissée dans la direction tangentielle du filetage d'accouplement (20, 50) et qu'ainsi un couple soit produit sur le moteur (10) dans le sens de desserrage du filetage d'accouplement (20, 50), ou que la partie de sécurité (70) soit vissée sur le moteur (10) au moyen de la vis de fixation (72) pouvant être vissée dans la direction tangentielle du filetage d'accouplement (20, 50) et qu'ainsi un couple soit produit sur la transmission (40) dans le sens de desserrage du filetage d'accouplement (20, 50).
